# EUROPÄISCHE PATENTSCHRIFT

(11) **EP 0 365 027 B1**
(45) Veröffentlichungstag und Bekanntmachung des Hinweises auf die Patenterteilung: **07.09.1994**
(21) Anmeldenummer: 89119513.3
(22) Anmeldetag: 20.10.1989
(51) Int. Cl.: C09D 183/14, C03C 17/02, C04B 41/85

(54) **Verfahren zur Herstellung von Materialien mit einem strukturierten Überzug**
Process for making materials having a structured surface
Procédé de fabrication de matériaux à surface possédant une structure

(30) Priorität: 21.10.1988 DE 3835968
(43) Veröffentlichungstag der Anmeldung: 25.04.1990
(73) Patentinhaber: FRAUNHOFER-GESELLSCHAFT ZUR FÖRDERUNG DER ANGEWANDTEN FORSCHUNG E.V., 80636 München (DE)
(72) Erfinder: Schmidt, Helmut, D-8705 Zellingen (DE); Haas, Karlheinz Dr., D-6710 Frankenthal 5 (DE); Hörth, Franz-Josef, D-8701 Schweinfurt (DE)
(74) Vertreter: Barz, Peter, Dr.

(56) Entgegenhaltungen:
- EP-A- 0 011 738
- EP-A- 0 335 422
- EP-A- 0 358 011
- DE-A- 3 407 087
- CHEMICAL ABSTRACTS, Band 101, Nr. 2, Juli 1984, Seite 251, Zusammenfassung Nr. 11457j, Columbus, Ohio, US; & JP-A-59 27 961 (ALPS ELECTRIC CO.) 14-02-1984

## Beschreibung

Die vorliegende Erfindung betrifft ein Verfahren zur Herstellung von Materialien mit einem strukturierten Überzug, insbesondere einem strukturierten Überzug, der durch geeignete, insbesondere thermische und oxidative Behandlung, in Glas bzw. Keramik umwandelbar ist. Außerdem betrifft die vorliegende Erfindung einen Lack zur Verwendung in einem derartigen Verfahren.

Die EP-A-358011, ein gemäß Art. 54(3) zu berücksichtigendes Dokument, beschreibt ein Verfahren und Lacke zur Herstellung von kratzfesten Materialien. Die eingesetzten Lacke werden aus mindestens einer hydrolysierbaren Siliziumverbindung und mindestens einer hydrolysierbaren Aluminiumverbindung als zwingende Komponenten hergestellt. Dabei macht die Aluminiumverbindung 5 bis 75 Mol-% der eingesetzten Ausgangsverbindungen aus, wobei in den Beispielen dieser Druckschrift nur Mengen von bis zu 20 Mol-% eingesetzt werden.

Die EP-A-11738 beschreibt ein Verfahren zur Herabsetzung der Porosität und der Oberflächenrauhigkeit einer keramischen Unterlage und eine Beschichtungszusammensetzung dafür. Diese Beschichtungszusammensetzung enthält wenigstens eine nichtpolymere organische Siliziumverbindung und wird nach ihrer Auftragung zur Umwandlung der Siliziumverbindungen in Siliciumoxide erhitzt.

Die DE-A-3407087 betrifft ein Verfahren und einen Lack zur Herstellung kratzfester Beschichtungen, wobei der Lack erhalten wurde durch hydrolytische Polykondensation mindestens einer Titan- oder Zirkoniumverbindung und mindestens eines organofunktionellen Silans als zwingenden Komponenten.

Die in Chemical Abstracts 101, 11457j , 1984 zusammengefaßte JP-A-59-27961 betrifft die Herstellung eines transparenten Bleioxid-Siliziumdioxid-Films, der eine hohe Festigkeit, einen hohen Widerstand und eine hohe Durchlässigkeit besitzt, auf Glasplatten.

Eine Möglichkeit, strukturierte Überzüge aus glasartigem oder keramischem Material auf einem Substrat zu bilden, besteht theoretisch darin, Glas- oder keramische Pulver mit einem geeigneten, thermisch oder durch Strahlung härtbaren organischen Bindemittel zu vermischen, diese Mischung auf ein Substrat aufzutragen, den resultierenden Überzug bildweise zu belichten oder punktförmig zu erwärmen und die nicht-belichteten bzw. erwärmten Bereiche, in denen keine Härtung Stattgefunden hat, danach in irgendeiner Weise, z.B. durch Auflösen in einem geeigneten Lösungsmittel, zu entfernen. Daraufhin könnte dann das gehärtete Bindemittel thermisch und/oder oxidativ unter Zurücklassung der Keramik oder des Glases in Form eines strukturierten Überzugs zerstört werden. Dieses Verfahren hat den Nachteil, daß die Mischung aus keramischem bzw. Glaspulver und Bindemittel eine Dispersion und damit in der Regel undurchsichtig (trüb) ist, was zur Folge hat, daß es schwierig ist, bei der Härtung durch Lichteinstrahlung die ganze Schichtdicke zu erfassen. Außerdem tritt Lichtstreuung an den Grenzflächen auf, wodurch keine scharfen Kanten erzeugt werden können.

Der vorliegenden Erfindung liegt unter anderem die Aufgabe zugrunde, ein Verfahren zur Verfügung zu stellen, das die obigen Nachteile nicht zeigt, insbesondere indem es die stoffliche Inhomogenität des zu härtenden Überzugslackes so weit wie möglich vermeidet.

Diese Aufgabe wird erfindungsgemäß durch ein Verfahren zur Herstellung von Materialien mit einem strukturierten, in Glas bzw. Keramik umwandelbaren Überzug gelöst, das dadurch gekennzeichnet ist, daß man
(a) auf ein Substrat einen Lack aufbringt, der erhalten wurde durch hydrolytische Polykondensation von Verbindungen von Glas bzw. Keramik aufbauenden Elementen, wobei sich unter diesen Verbindungen bezogen auf monomere Verbindungen 25 bis 75 Molprozent mindestens einer Siliciumverbindung der allgemeinen Formel (I)

   R'SiR₃ (I)

   in welcher R' für eine hydrolysestabile Gruppe mit einer oder mehreren Kohlenstoff-Kohlenstoff-Doppel- oder Dreifachbindungen oder einer Epoxygruppe steht und die Reste R, die gleich oder verschieden sein können, OH-Gruppen und/oder hydrolyseempfindliche Gruppen darstellen, die ausgewählt sind aus Wasserstoff, Halogen (z.B. F, Cl und Br), Alkoxy, Acyloxy, Alkylcarbonyl und -NR'''₂ (R''' = H und/oder Alkyl)
   oder entsprechende Mengen einer bereits vorkondensierten Verbindung der allgemeinen Formel (I);
   und 25 bis 70 Molprozent mindestens einer Verbindung der allgemeinem Formel (II) und/oder der allgemeinen Formel (III)

   SiR₄ (II)

   und/oder

   AlR₃ (III)

   in welchen die Reste R, die gleich oder verschieden sein können, wie oben definiert sind, befanden;
(b) Teile des aufgetragenen Lacks, gegebenenfalls nach vorheriger Trocknung, thermisch und/oder durch Bestrahlung härtet, indem man nur vorbestimmte Bereiche des Lacks der thermischen und/oder Strahlungsenergie aussetzt; und
(c) die nicht gehärteten Teile des Lacks in geeigneter Weise entfernt.

Beispiele für Gruppen R' in der obigen Formel (I) sind gegebenenfalls substituierte Alkenyl- und Alkinylreste, z.B. geradkettige, verzweigte oder cyclische Reste mit 2 bis 20, vorzugsweise 2 bis 10 Kohlenstoffatomen und mindestens einer C-C-Doppel- bzw. Dreifachbindung und insbesondere niedere Alkenylreste und Alkinylreste, wie Vinyl, 1- und 2-Propenyl, Butenyl, Isobutenyl, Styryl und Propargyl. Besonders bevorzugt werden Reste R' mit aktivierter C-C-Mehrfachbindung, z.B. Gruppen, die einen Methacryl- oder Acrylrest umfassen. Als bevorzugte Beispiele für Reste, die einen Epoxygruppe umfassen, seien Glycidyloxyalkylreste, insbesondere solche mit 1 bis 4 Kohlenstoffatomen im Alkylteil, genannt. Ein besonders bevorzugtes Beispiel stellt γ-Glycidyloxypropyl dar.

Für die vorstehend angegebenen allgemeinen Bedeutungen gilt:
Alkylreste sind z.B. geradkettige, verzweigte oder cyclische Reste mit 1 bis 20, vorzugsweise 1 bis 10, Kohlenstoffatomen und insbesondere niedere Alkylreste mit 1 bis 6, vorzugsweise 1 bis 4 Kohlenstoffatomen. Spezielle Beispiele hierfür sind Methyl, Ethyl, n-Propyl, Isopropyl, n-Butyl, sek-Butyl, tert-Butyl, Isobutyl, n-Pentyl, n-Hexyl, Dodecyl, Octadecyl und Cyclohexyl.

Die bevorzugten Alkoxy-, Acyloxy-, Alkylamino-, Dialkylamino- und Alkylcarbonylreste leiten sich von den soeben genannten Alkylresten ab.

Spezielle Beispiele für die Gruppen R sind Methoxy, Ethoxy, n- und i-Propoxy, n-, sek- und tert-Butoxy, Isobutoxy, β-Methoxyethoxy, Acetyloxy, Propionyloxy, Monomethylamino, Monoethylamino, Dimethylamino, Diethylamino, N-Ethylanilino, Methylcarbonyl, Ethylcarbonyl, Methoxycarbonyl und Ethoxycarbonyl.

Da die Reste R im Endprodukt nicht vorhanden sind, sondern durch Hydrolyse verloren gehen, wobei das Hydrolyseprodukt früher oder später auch in irgendeiner geeigneten Weise entfernt werden muß, sind Reste R besonders bevorzugt, die keine Substituenten tragen und zu Hydrolyseprodukten mit niedrigem Molekulargewicht, wie z.B. niederen Alkoholen, wie Methanol, Ethanol, Propanol und Butanol, führen.

Die Verbindungen der Formel (I) können ganz oder teilweise in Form von Vorkondensaten eingesetzt werden, d.h. Verbindungen, die durch teilweise Hydrolyse der Verbindungen der Formel (I), entweder allein oder im Gemisch mit anderen hydrolysierbaren Verbindungen, wie sie weiter unten beschrieben werden, entstanden sind. Derartige, im Reaktionsmedium vorzugsweise lösliche Oligomere können geradkettige oder cyclische, niedermolekulare Teilkondensate (Polyorganosiloxane) mit einem Kondensationsgrad von z.B. etwa 2 bis 100, insbesondere etwa 2 bis 6, sein.

Konkrete Beispiele für (zum Großteil im Handel erhältliche) Verbindungen der allgemeinen Formel (I), die erfindungsgemäß bevorzugt eingesetzt werden, sind γ-(Meth)acryloxypropyltrimethoxysilan, Vinyltrichlorsilan, Vinyltrimethoxysilan, Vinyltriethoxysilan und Vinyl-tris(β-methoxyethoxy)silan sowie γ-Glycidyloxypropyltrimethoxysilan.

Andere geeignete Verbindungen der allgemeinen Formel (I) sind die folgenden:
CH₂=CH-Si(OOCCH₃)₃
CH₂=CH-SiCl₃
CH₂=CH-CH₂-Si(OCH₃)₃
CH₂=CH-CH₂-Si(OC₂H₅)₃ 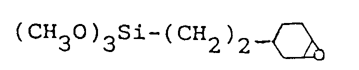
Diese Silane lassen sich nach bekannten Methoden herstellen; vergleiche W. Noll, "Chemie und Technologie der Silicone", Verlag Chemie GmbH, Weinheim/Bergstrasse (1968).

Die Verbindungen der allgemeinen Formel (I) werden nicht alleine verwendet, sondern im Gemisch mit Verbindungen von Elementen, die im allgemeinen zur Bildung von Glas bzw. Keramik herangezogen werden, wobei sich diese Verbindungen durch vorzugsweise vollständige Hydrolyse in das entsprechende Oxidhydrat überführen lassen. Elemente, von denen sich diese Verbindungen ableiten, sind Silicium und/oder Aluminium, was selbstverständlich nicht ausschließt, daß auch Verbindungen anderer, hier nicht erwähnter Elemente mitverwendet werden können.

Gemäß der vorliegenden Erfindung handelt es sich bei den durch Hydrolyse in das entsprechende Oxidhydrat überführbaren Verbindungen um solche der nachstehend angegebenen allgemeinen Formeln (II) und (III).

SiR₄ (II)

in welcher die Reste R, die gleich oder verschieden sein können, wie im Falle der Verbindungen der allgemeinen Formel (I) definiert sind, einschließlich der bevorzugten Bedeutungen.

Vorzugsweise sind die Gruppen R in den Verbindungen der Formel (II) (und auch denen der Formel (I)) identisch.

Als konkrete (und auch bevorzugte) Beispiele für Verbindungen der allgemeinen Formel (II) können angeführt werden:
Si(OCH₃)₄, Si(OC₂H₅)₄, Si(O-n- oder i-C₃H₇)₄ Si(OC₄H₉)₄, SiCl₄, HSiCl₃, Si(OOCCH₃)₄

AlR₃ (III)

in welcher die Reste R, die gleich oder verschieden sein können, wie im Falle der Verbindungen der allgemeinen Formeln (I) und (II) definiert sind, wobei bevorzugte Bedeutungen Halogen, Alkoxy, Acyloxy und Hydroxy sind, und die soeben genannten Gruppen ganz oder teilweise durch Chelatliganden (z.B. Acetylaceton oder Acetessigsäureester) ersetzt sein können. Bevorzugte Aluminiumverbindungen sind die Aluminiumalkoxide und -halogenide. In diesem Zusammenhang können als konkrete Beispiele genannt werden:
Al(OCH₃)₃, Al(OC₂H₅)₃, Al(O-n-C₃H₇)₃ Al(O-i-C₃H₇)₃, Al(OC₄H₉)₃, Al(O-i-C₄H₉)₃ Al(O-sek-C₄H₉)₃, AlCl₃, AlCl(OH)₂
Bei Raumtemperatur flüssige Verbindungen, wie z.B. Aluminium-sek-butylat und Aluminium-isopropylat, werden besonders bevorzugt.

Neben den oben genannten Verbindungen können auch andere, hydrolytisch polykondensierbare Verbindungen zur Herstellung des Lacks zur Verwendung im erfindungsgemäßen Verfahren herangezogen werden. Dies gilt insbesondere für Verbindungen der allgemeinen Formel (IV)

R''SiR₃ (IV)

in welcher R'' eine Alkyl- oder Arylgruppe, bevorzugt eine (nicht-substituierte) C₁₋₄-Alkylgruppe oder Phenylgruppe, darstellt und die Reste R, die gleich oder verschieden sein können, vorzugsweise aber gleich sind, wie oben für die Verbindungen der allgemeinen Formeln (I) und (II), einschließlich der bevorzugten Bedeutungen, definiert sind.

Konkrete Beispiele für derartige Verbindungen sind z.B.;
CH₃-SiCl₃, CH₃-Si(OC₂H₅)₃, C₂H₅-SiCl₃, C₂H₅-Si(OC₂H₅)₃, C₃H₇-Si(OCH₃)₃, C₆H₅-Si(OCH₃)₃, C₆H₅-Si(OC₂H₅)₃, (CH₃O)₃-Si-C₃H₆-Cl, (C₂H₅O)₃Si-C₃H₆-CN, (CH₃O)₃-Si-C₃H₆-NH₂, (C₂H₅O)₃-Si-C₃H₆-NH₂.

Auch diese Verbindungen sind entweder im Handel erhältlich oder nach bekannten Methoden herstellbar.

Selbstverständlich können erfindungsgemäß auch Verbindungen eingesetzt werden, die z.B. durch die folgenden Formeln (V) bis (X) repräsentiert werden, in denen die Reste R, R' und R'' die für die Formeln (I) bzw. (IV) angegebene Bedeutung haben:

R'₂SiR₂ (V)

R''₂SiR₂ (VI)

R'R''SiR₂ (VII)

R'₂R''SiR (VIII)

R'R''₂SiR (IX)

R'₃SiR (X)

Der Einsatz dieser Verbindungen ist jedoch nicht besonders bevorzugt und sollte, wenn überhaupt, auf ein geringes Maß, z.B. Mengen bis zu 10 Molprozent, beschränkt bleiben.

Erfindungsgemäß bevorzugte Mengenbereiche für die Herstellung des strukturierbaren Lackes sind die folgenden:
Verbindungen der allgemeinen Formel (I):
30 bis 75 Molprozent, insbesondere 35 bis 75 Molprozent.

Durch Hydrolyse in das entsprechende Oxidhydrat überführbare Verbindungen (d.h. solche der allgemeinen Formeln (II) und/oder (III)):
25 bis 60 Molprozent.

Verbindungen der allgemeinen Formel (IV):
0 bis 40 Molprozent, insbesondere 5 bis 30 Molprozent.

Die oben angegebenen Bereich beziehen sich auf eingesetzte monomere, d.h. noch nicht vorkondensierte Verbindungen. Derartige Vorkondensate können erfindungsgemäß aber Verwendung finden, wobei diese Vorkondensate durch Einsatz einer einzigen Verbindung oder durch Einsatz mehrerer Verbindungen, die gegebenenfalls auch unterschiedliche Zentralatome aufweisen können, gebildet werden können.

Obwohl im erfindungsgemäß einzusetzenden Lack durch die Verwendung der Verbindungen der allgemeinen Formel (I) bereits dafür gesorgt ist, daß Gruppen (R′) vorhanden sind, die durch Polymerisation eine Vernetzung und somit Härtung des Überzugs bewirken können, ist es natürlich auch möglich, dem Lack neben Lacklösungsmitteln und anderen üblichen Additiven Verbindungen zuzusetzen, die ebenfalls einer Polymerisation zugänglich sind und so zu einer Copolymerisation führen. Für diese Zwecke geeignete, ungesättigte Verbindungen sind z.B. reaktive Acrylat- und Methacrylatmonomere, wie Dipropylenglykoldiacrylat, Tripropylenglykoldiacrylat, Trimethylolpropandiacrylat, Pentaerythrittri(tetra)acrylat, Urethandimethacrylat, 1,6-Hexandioldimethacrylat, 1,6-Hexandioldiacrylat und entsprechende Präpolymere. Da diese zusätzlichen Verbindungen aber ebenso wie höhermolekulare (und/oder in großer Zahl anwesende) Gruppen R′und R˝ die Gründichte des in Glas oder keramisches Material überführbaren, gehärteten Überzugs verringern, was in der Regel weniger erwünscht ist, sollte auf die obigen Verbindungen nur dann zurückgegriffen werden, wenn der gehärtete Lack als solcher, d.h. ohne Überführung in Glas bzw. Keramik, verwendet werden soll.

Die Herstellung des erfindungsgemäß zu verwendenden Lacks kann in auf diesem Gebiet üblicher Art und Weise erfolgen. So kann man z.B. die Ausgangsverbindungen als solche oder gelöst in einem geeigneten (polaren) Lösungsmittel, wie z.B. Ethanol oder Isopropanol, mit der stöchiometrisch erforderlichen Menge an Wasser, bevorzugt aber mit einem Überschuß an Wasser, auf einmal oder stufenweise in Kontakt bringen. Die Hydrolyse erfolgt in der Regel bei Temperaturen zwischen -20 und 130°C, vorzugsweise zwischen 0°C und 30°C bzw. dem Siedepunkt des gegebenenfalls eingesetzten Lösungsmittels. Die beste Art und Weise des Inkontaktbringens hängt unter anderem vor allem von der Reaktivität der eingesetzten Ausgangsverbindungen ab. So kann man z.B. die gelösten Ausgangsverbindungen langsam zu einem Überschuß an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern es mit Hilfe von wasserhaltigen organischen oder anorganischen Systemen in das Reaktionssystem einzutragen. Als besonders geeignet hat sich in vielen Fällen die Eintragung der Wassermengen in das Reaktionsgemisch mit Hilfe von feuchtigkeitsbeladenen Adsorbentien, z.B. Molekularsieben, und wasserhaltigen organischen Lösungsmitteln, z.B. 80%igem Ethanol, erwiesen. Die Wasserzugabe kann auch über eine Reaktion erfolgen, bei der Wasser gebildet wird, z.B. bei der Esterbildung aus Säure und Alkohol.

Wenn ein Lösungsmittel verwendet wird, kommen neben den oben genannten bevorzugt verwendeten niederen aliphatischen Alkoholen auch Ketone, vorzugsweise niedere Dialkylketone, wie Aceton und Methylisobutylketon, Ether, vorzugsweise niedere Dialkylether, wie Diethylether, THF, Amide, Ester, insbesondere Essigsäureethylester, Dimethylformamid, und deren Gemische in Frage.

Die Polykondensation kann gegebenenfalls unter Zusatz eines Katalysators, z.B. einer Protonen oder Hydroxyionen abspaltenden Verbindung oder eines Amins erfolgen. Beispiele für geeignete Katalysatoren sind organische oder anorganische Säuren, wie Salzsäure und Essigsäure, organische oder anorganische Basen, wie Ammoniak, Alkali-und Erdalkalimetallhydroxide, z.B. Natrium-, Kalium- oder Calciumhydroxid, und im Reaktionsmedium lösliche Amine, z.B. niedere Alkylamine oder Alkanolamine. Flüchtige Säuren und Basen, insbesondere Salzsäure, Ammoniak und Triethylamin werden besonders bevorzugt. Die Gesamt-Katalysatorkonzentration kann z.B. bis zu 3 Mol pro Liter betragen.

Die Ausgangsverbindungen müssen nicht notwendigerweise bereits alle zu Beginn der Hydrolyse (Polykondensation) vorhanden sein, sondern in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Um Ausfällungen während der Hydrolyse und Polykondensation so weit wie möglich zu vermeiden, wird es bevorzugt, die Wasserzugabe in mehreren Stufen, z.B. in drei Stufen, durchzuführen. Dabei wird in der ersten Stufe z.B. ein Zehntel bis ein Zwanzigstel der zur Hydrolyse stöchiometrisch benötigten Wassermenge zugegeben. Nach kurzem Rühren folgt die Zugabe von einem Fünftel bis einem Zehntel der stöchiometrischen Wassermenge und nach weiterem kurzen Rühren wird schließlich eine stöchiometrische Wassermenge zugegeben, so daß am Schluß ein leichter Wasserüberschuß vorliegt.

Die Kondensationszeit richtet sich nach den jeweiligen Ausgangskomponenten und deren Mengenanteilen, dem gegebenenfalls verwendeten Katalysator, der Reaktionstemperatur, etc. Im allgemeinen erfolgt die Polykondensation bei Normaldruck, sie kann jedoch auch bei erhöhtem oder verringertem Druck durchgeführt werden.

Nach Beendigung der Wasserzugabe wird vorzugsweise noch längere Zeit, z.B. 2 bis 3 Stunden, bei Raumtemperatur oder leicht erhöhter Temperatur gerührt.

Der so erhaltene Lack kann entweder als solcher oder nach teilweiser oder nahezu vollständiger Entfernung des verwendeten Lösungsmittels bzw. des während der Reaktion gebildeten Lösungsmittels (z.B. entstehen bei der Hydrolyse von Alkoxiden Alkohole) im erfindungsgemäßen Verfahren eingesetzt werden. In einigen Fällen kann es sich als vorteilhaft erweisen, in dem nach der Polykondensation erhaltenen Lack das überschüssige Wasser und das gebildete und gegebenenfalls zusätzlich eingesetzte Lösungsmittel durch ein anderes Lösungsmittel zu ersetzen, um den Lack zu stabilisieren. Zu diesem Zweck kann der Lack z.B. im Vakuum bei leicht erhöhter Temperatur (bis maximal 80°C) so weit eingedickt werden, daß er noch problemlos mit einem anderen Lösungsmittel aufgenommen werden kann. Als Ersatz-Lösungsmittel haben sich Essigester, Toluol, THF, Butanol, Methylenchlorid, usw. bewährt. Derartig stabilisierte Lacke sind dann ohne optische Änderung und ohne merkliche Viskositätszunahme in der Regel für mehr als 100 Tage stabil.

Ist eine Aushärtung des Lacks durch Bestrahlung beabsichtigt, so muß dem Lack vor der Auftragung auf ein geeignetes Substrat noch ein Initiator zugesetzt werden. Vorzugsweise wird ein Initiator auch zugesetzt, wenn die Aushärtung auf thermischem Wege erfolgen soll.

Als Photopolymerisationsinitiatoren können z.B. die im Handel erhältlichen eingesetzt werden. Beispiele hierfür sind Irgacure® 184 (1-Hydroxycyclohexylphenylketon), Irgacure® 500 (1-Hydroxycyclohexylphenylketon+Benzophenon) und andere von der Firma Ciba-Geigy erhältliche Photoinitiatoren vom Irgacure®-Typ; Darocur® 1173, 1116, 1398, 1174 und 1020 (erhältlich von der Firma Merck), Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzildimethylketal, 1,1,1-Trichloracetophenon, Diethoxyacetophenon und Dibenzosuberon.

Als thermische Initiatoren kommen insbesondere organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete und bevorzugte Beispiele für thermische Initiatoren sind Dibenzoylperoxid, tert-Butylperbenzoat sowie Azobisisobutyronitril.

Selbstverständlich kann auch ein Initiator verwendet werden, der eine ionische Polymerisation initiiert. Insbesondere bei Verbindungen der Formel (I) mit Resten R′, die eine Epoxygruppe aufweisen (z.B. γ-Glycidyloxypropyltrimethoxysilan) haben sich UV-Initiatoren bewährt, die eine kationische Polymerisation initiieren. In diesen Fällen sind die Aushärteergebnisse mit kationischen Initiatoren unter gleichen Bedingungen oft deutlich besser als mit radikalischen Initiatoren.

Der Initiator wird dem Lack in üblichen Mengen zugegeben. So kann z.B. einem Lack, der 30 bis 50 Gewichtsprozent Feststoff enthält, Initiator in einer Menge von z.B. 0,5 bis 2 Gewichtsprozent (bezogen auf die Gesamtmenge) zugesetzt werden.

Der gegebenenfalls (und vorzugsweise) mit einem Initiator versehene Lack wird dann auf ein geeignetes Substrat aufgebracht. Für diese Beschichtung werden übliche Beschichtungsverfahren angewandt, z.B. Tauchen, Fluten, Gießen, Schleudern, Spritzen oder Aufstreichen. Besonders bevorzugt werden erfindungsgemäß das Tauchen und das Schleudern.

Als Substrate eignen sich alle Werkstoffe, die den später bei der (thermischen) Härtung, insbesondere aber bei der Umwandlung des gehärteten Lacks in Glas oder Keramik erforderlichen Temperaturen standhalten können. Bevorzugt werden als Substrate Keramik, Glas und Metalle, z.B. Aluminium und Kupfer, eingesetzt. Die Oberfläche dieser Substrate kann gegebenenfalls vor der Auftragung des Lacks auf geeignete Art und Weise vorbehandelt werden, z.b. durch Auslaugen, Ausheizen, Grundierung mit einem Primer, Coronabehandlung (zwecks Verbesserung der Haftung) usw.

Vor der Härtung wird der aufgetragene Lack vorzugsweise abtrocknen gelassen. Danach kann er, abhängig von der Art des eingesetzten Initiators, thermisch oder durch Bestrahlen (z.B. mit einem UV-Strahler, einem Laser usw.) in an sich bekannter Weise gehärtet werden.

Es hat sich gezeigt, daß für Lacke mit Resten R′, die eine Epoxygruppe umfassen, eine thermische Härtung besonders vorteilhaft ist (gegebenenfalls muß dazu nicht einmal ein thermischer Initiator zugesetzt werden), während für Lacke mit Gruppen R′, die eine ungesättigte C-C-Bindung beinhalten, eine Strahlungshärtung meist vorteilhafter ist.

In jedem Fall erfolgt erfindungsgemäß die Härtung des Lackes nicht ganzflächig, sondern es werden nur vorbestimmte Bereiche des Lackes gehärtet, was z.B. durch punktförmiges Erwärmen oder durch Belichten des Lacks durch Blenden oder Matrizen möglich ist. Durch diese Härtung von ausgewählten Bereichen des Lacks entsteht eine Struktur, die zum Vorschein gebracht werden kann, wenn man nach der Härtung die nicht-gehärteten Bereiche des Lacks vom Substrat entfernt. Eine derartige Entfernung kann in an sich üblicher Weise erfolgen, insbesondere durch Auflösen der nicht-ausgehärteten Bereiche in einem geeigneten Lösungsmittel bzw. einer Lösungsmittelmischung. Beispiele für derartige Lösungsmittel sind Essigester und Methylenchlorid sowie Mischungen derselben. Auch verdünnte Laugen, z.B. 2N NaOH, lassen sich zu diesem Zweck mit Vorteil einsetzen.

Die nach der Entfernung der nicht-gehärteten Lackbereiche zurückgebliebenen Überzugsteile können dann in einem weiteren Schritt in ein Glas oder eine Keramik umgewandelt werden. Hierzu wird z.B. durch Plasmaoxidation zuerst der organische Anteil der Schicht (insbesondere die Gruppen R′) entfernt. Bei etwas erhöhten Temperaturen von ca. 550°C können die Schichten dann in den (Glas- oder Keramik-)Endzustand überführt werden. Darüber hinaus ist es auch möglich, die organischen Reste im ausgehärteten Lack zu belassen und das so erhaltene Substrat als solches in der Mikroelektronik einzusetzen.

Selbstverständlich ist das erfindungsgemäße Verfahren nicht darauf beschränkt, nur eine einzige Lackschicht auf dem Substrat aufzubringen, sondern es besteht auch die Möglichkeit, nach dem Aushärten bzw. nach dem Strukturieren einer Schicht weitere Schichten aufzutragen und damit zu Multi-Layer-Strukturen zu gelangen.

Bei der Gestaltung der Zusammensetzung des Grundglases oder der Grundkeramik steht ein weites Zusammensetzungsfeld offen, es können außerdem Dotierungen zur Erzielung ganz spezieller Effekte mit eingeführt werden. Eine weitere Möglichkeit ergibt sich durch die Einführung von metallorganischen Komplexen, die in komplexierter Form transparent sind. So können z.B. zur Herstellung des Lacks auch Aminosilane eingesetzt werden, um Kupfer- oder Silber-Kationen zu komplexieren. Die durch die Strukturierung des Lacks z.B. erzeugten Bahnen können dann durch Reduktion der im Lack vorhandenen komplexierten Metalle leitfähig gemacht werden.

Das erfindungsgemäße Verfahren zeigt insbesondere den Vorteil, daß die zu strukturierenden Überzüge transparent, also lichtdurchlässig hergestellt werden können. Dies hat zur Folge, daß die Härtung über Lichteinstrahlung die ganze Schichtdicke erfaßt und daß bei geeigneter Wahl der Reste R′ sehr scharfe Kanten entstehen können, da die Lichtstreuung an Grenzflächen unterbleibt.

Im folgenden wird die Erfindung anhand konkreter Beispiele weiter erläutert.

### Beispiel 1

45 Molprozent Methacryloxypropyltrimethoxysilan und 30 Molprozent Methyltrimethoxysilan wurden bei Raumtemperatur vorgelegt. Zu dieser Mischung wurden 25 Molprozent Aluminium-sek-butylat langsam unter Rühren zugetropft. Nach dem Zutropfen wurde weitere 5 Minuten gerührt, worauf die resultierende Mischung auf 15°C abgekühlt wurde. Sodann wurde ein Sechzehntel der zur vollständigen Hydrolyse stöchiometrisch erforderlichen Menge Wasser langsam unter Rühren zugetropft. Es wurde 5 Minuten nachgerührt und dann auf 8°C abgekühlt. Daraufhin wurden zwei Sechzehntel der zur vollständigen Hydrolyse stöchiometrisch erforderlichen Wassermenge langsam unter Rühren zugetropft, worauf 15 Minuten nachgerührt wurde. Während der Wasserzugabe trat eine leichte Trübung auf, die jedoch während des Nachrührens zum Großteil verschwand.

Schließlich wurde die zur vollständigen Hydrolyse theoretisch erforderliche Wassermenge zugetropft, so daß am Ende ein Wasserüberschuß von drei Sechzehntel der stöchiometrisch erforderlichen Menge vorlag. Das Gemisch trübte sich bei der Wasserzugabe erneut ein, die Trübung verschwand jedoch während einer Nachrührzeit von 2 Stunden vollständig.

Beim Ersatz von Methacryloxypropyltrimethoxysilan durch γ-Glycidyloxypropyltrimethoxysilan kann nach derselben Vorschrift gearbeitet werden. Wird das Methyltrimethoxysilan jedoch durch Phenyltriethoxysilan ersetzt, lassen sich nach der obigen Vorschrift keine trübungsfreien Lacke herstellen. Im letzteren Fall kann gemäß Beispiel 2 vorgegangen werden.

### Beispiel 2

45 Molprozent Methacryloxypropyltrimethoxysilan oder 45 Molprozent γ-Glycidyloxypropyltrimethoxysilan wurden zusammen mit 30 Molprozent Phenyltriethoxysilan in einem Kolben vorgelegt. Bei Raumtemperatur wurde mit einem Sechzehntel der zur vollständigen Hydrolyse stöchiometrisch erforderlichen Wassermenge vorhydrolysiert, wobei das Wasser langsam unter Rühren zugetropft wurde. Daraufhin wurde 5 Minuten nachgerührt.

Sodann wurde die Mischung unter Rühren auf 15°C abgekühlt und 25 Molprozent Aluminium-sek.-butylat (mit Isopropanol im Verhältnis 1:1 verdünnt) wurden unter Rühren langsam zugetropft, worauf 15 Minuten nachgerührt wurde. Die nachfolgende Hydrolyse wurde wie in Beispiel 1 durchgeführt.

Die auftretenden Trübungen fielen in den Lacken, die Phenyltriethoxysilan enthielten, stärker aus als in den Lacken mit Methyltrimethoxysilan. Die relativ starke Trübung nach der dritten Wasserzugabe verschwand jedoch während der Nachrührzeit (bei Raumtemperatur) vollständig. Es ergaben sich keine Hinweise auf Inhomogenitäten bezüglich der Al-Si-Verteilung im µm-Bereich (Rasterelektronenmikroskop-EDAX-Untersuchungen).

### Beispiel 3

Die in den Beispielen 1 und 2 hergestellten klaren Lacke waren in den wässrigen Alkoholgemischen über längere Zeit nicht stabil. Eine Stabilisierung konnte durch Ersetzen des wässrigen Alkohols durch ein geeignetes Lösungsmittel erreicht werden. Der Großteil des Lösungsmittels wurde bei maximal 80°C abgezogen und der Lack soweit eingedickt, daß er noch problemlos mit Lösungsmittel aufgenommen werden konnte. Ein Lack, der aus 0,44 Mol Ausgangsverbindungen erhalten wurde, wurde mit zweimal jeweils 150 ml Lösungsmittel aufgenommen und erneut einrotiert. Danach wurden noch ca. 50 ml Lösungsmittel zugesetzt.

Für Lacke, die sich von Methacryloxypropyltrimethoxysilan ableiteten, erwies sich Essigsäureethylester als besonders gut geeignetes Lösungsmittel für diesen Zweck.

### Beispiel 4

Den gemäß Beispiel 3 hergestellten Lacken, die ca. 40 Gewichtsprozent Feststoff enthielten, wurde 1 Gewichtsprozent Initiator (bezogen auf die Gesamtmenge) zugesetzt. Die Mischung aus Initiator kann mehrere Stunden verarbeitet werden. Die beschichteten Substrate wurden mit einem Filmziehschlitten beschichtet. Der aufgetragene Lack wurde nach dem Auftragen 15 Minuten abtrocknen gelassen. Danach wurde er mit einem UV-Strahler (Leistungsaufnahme: 1000 W; Abstand zum Strahler: 30 cm) innerhalb von 60 Sekunden ausgehärtet. Die so gehärteten, unter Verwendung von γ-Methacryloxypropyltrimethoxysilan hergestellten Lacke zeigten bei einer Schichtdicke von 20 µm eine Ritzhärte von 5 bis 8 g und eine Abriebfestigkeit von 3 bis 5% Streulichtzunahme nach 100 Zyklen.

Die unter Verwendung von γ-Glycidyloxypropyltrimethoxysilan hergestellten Lacke wurden ohne Zugabe von Initiator 15 Minuten auf 130°C erhitzt, wodurch vergleichbare bzw. sogar bessere Ergebnisse hinsichtlich Ritzhärte und Abriebfestigkeit erhalten wurden.

In der folgenden Tabelle sind weitere Beispiele von Ausgangsverbindungs-Kombinationen angegeben, die nach den oben beschriebenen oder ähnlichen Verfahren zu Lacken verarbeitet wurden und die nach der Härtung die ebenfalls in der Tabelle angegebenen Eigenschaften hinsichtlich Ritzhärte und Haftung auf Glas zeigten.

**TABELLE**

| **Ausgangsverbindungen** | | **Molverhältnis A:B** | **Austausch-Lösungsmittel** | **Ritzhärte auf Glas (g)** | **Haftung auf Glas** |
|---|---|---|---|---|---|
| **A** | **B** | | | | |
| MEMO¹ | TEOS² | 3:1 | Essigester | 10 | GT2 |
| | | 3:2 | - | 20 | GT2 |
| | | 2:3 | - | 10 | GT3 |
| MEMO¹ | ASB⁴ | 3:1 | Essigester | 25 | GT4 |
| GLYMO³ | ASB⁴ | 3:1 | n-Butanol | 15 | GT1-2 |
| | | 3:2 | " | 25 | n.b. |

| | | | | | |
|---|---|---|---|---|---|
| 1 = γ-Methacryloxypropyltrimethoxysilan | | | | | |
| 2 = Tetraethoxysilan | | | | | |
| 3 = γ-Glycidyloxypropyltrimethoxysilan | | | | | |
| 4 = Al-sek-butylat | | | | | |

## Patentansprüche

1. Verfahren zur Herstellung von Materialien mit einem strukturierten, in Glas bzw. Keramik umwandelbaren Überzug, dadurch gekennzeichnet, daß man
(a) auf ein Substrat einen Lack aufbringt, der erhalten wurde durch hydrolytische Polykondensation von Verbindungen von Glas bzw. Keramik aufbauenden Elementen, wobei sich unter diesen Verbindungen bezogen auf monomere Verbindungen 25 bis 75 Molprozent mindestens einer Siliciumverbindung der allgemeinen Formel (I)
R'SiR₃ (I)
in welcher R' für eine hydrolysestabile Gruppe mit einer oder mehreren Kohlenstoff-Kohlenstoff-Doppel- oder Dreifachbindungen oder einer Epoxygruppe steht und die Reste R, die gleich oder verschieden sein können, OH-Gruppen und/oder hydrolyseempfindliche Gruppen darstellen, die ausgewählt sind aus Wasserstoff, Halogen, Alkoxy, Acyloxy, Alkylcarbonyl und -NR'''₂ (R''' = H und/oder Alkyl)
oder entsprechende Mengen einer bereits vorkondensierten Verbindung der allgemeinen Formel (I);
und 25 bis 70 Molprozent mindestens einer Verbindung der allgemeinen Formel (II) und/oder der allgemeinen Formel (III)
SiR₄ (II)
und/oder
AlR₃ (III)
in welchen die Reste R, die gleich oder verschieden sein können, wie oben definiert sind, befanden;
(b) Teile des aufgetragenen Lacks, gegebenenfalls nach vorheriger Trocknung, thermisch und/oder durch Bestrahlung härtet, indem man nur vorbestimmte Bereiche des Lacks der thermischen und/oder Strahlungsenergie aussetzt; und
(c) die nicht gehärteten Teile des Lacks in geeigneter Weise entfernt.

2. Verfahren nach Anspruch 1, dadurch gekennzeichnet, daß es sich bei dem Rest R' in der allgemeinen Formel (I) um eine Gruppe mit aktivierter (C-C-)Doppelbindung, insbesondere um einen eine (meth)acrylische Gruppe umfassenden Rest, oder um einen eine Epoxygruppe umfassenden Rest handelt.

3. Verfahren nach einem der Ansprüche 1 und 2, dadurch gekennzeichnet, daß die Verbindung der allgemeinen Formel (I) in Mengen von 30 bis 75 Molprozent, insbesondere 35 bis 75 Molprozent verwendet wird.

4. Verfahren nach einem der Ansprüche 1 bis 3, dadurch gekennzeichnet, daß sich der Lack auch von mindestens einer Verbindung der allgemeinen Formel (IV) ableitet:
R''SiR₃ (IV)
in welcher R'' eine Alkyl- oder Arylgruppe darstellt und die Reste R, die gleich oder verschieden sein können, wie in den Ansprüchen 1 und 2 definiert sind;
die in Mengen von bis zu 40 Molprozent, vorzugsweise 5 bis 30 Molprozent (auf Basis monomerer Verbindungen), eingesetzt wurde.

5. Verfahren nach einem der Ansprüche 1 bis 4, dadurch gekennzeichnet, daß als Substrat, auf das der Lack aufgebracht wird, Glas oder Metall, insbesondere Aluminium oder Kupfer, verwendet wird.

6. Verfahren nach einem der Ansprüche 1 bis 5, dadurch gekennzeichnet, daß das Aufbringen des Lacks auf das Substrat durch Tauchen oder Schleudern erfolgt.

7. Verfahren nach einem der Ansprüche 1 bis 6, dadurch gekennzeichnet, daß die Härtung in Stufe (b) durch energiereiche Strahlung, insbesondere UV-Strahlung, in Anwesenheit eines Photoinitiators erfolgt.

8. Verfahren nach einem der Ansprüche 1 bis 7, dadurch gekennzeichnet, daß der Lack zwecks Härtung durch ein Blendensystem oder eine Matrize bestrahlt oder punktförmig erwärmt wird.

9. Verfahren nach einem der Ansprüche 1 bis 8, dadurch gekennzeichnet, daß das Entfernen der nicht gehärteten Lackteile in Stufe (c) durch Auflösen derselben in einem geeigneten Lösungsmittel bzw. Lösungsmittelgemisch erfolgt.

10. Lack zur Verwendung in dem Verfahren gemäß einem der Ansprüche 1 bis 9, dadurch gekennzeichnet, daß er hergestellt wurde durch hydrolytische Polykondensation von
25 bis 75 Molprozent mindestens einer Verbindung der allgemeinen Formel (I)
R'SiR₃ (I)
in welcher R' für eine hydrolysestabile Gruppe mit einer oder mehreren Kohlenstoff-Kohlenstoff-Doppel- oder Dreifachbindungen oder einer Epoxygruppe steht und die Reste R, die gleich oder verschieden sein können, OH-Gruppen und/oder hydrolyseempfindliche Gruppen darstellen, die ausgewählt sind aus Wasserstoff, Halogen, Alkoxy, Acyloxy, Alkylcarbonyl und -NR'''₂ (R''' = H und/oder Alkyl);
25 bis 70 Molprozent mindestens einer Verbindung der allgemeinen Formel (II) und/oder der allgemeinen Formel (III)
SiR₄ (II)
und/oder
AlR₃ (III)
in welchen die Reste R, die gleich oder verschieden sein können, wie oben definiert sind;
0 bis 40 Molprozent, insbesondere 5 bis 30 Molprozent, mindestens einer Verbindung der allgemeinen Formel (IV)
R''SiR₃ (IV)
in welcher R'' eine Alkyl- oder Arylgruppe darstellt und die Reste R wie oben definiert sind;
wobei die obigen Verbindungen ganz oder teilweise in bereits vorkondensierter Form vorliegen können.

## Claims

1. Process for the production of materials having a structured coating which can be transformed into glass and ceramics, respectively, characterized by
(a) applying onto a substrate a coating composition obtained by hydrolytic polycondensation of compounds of elements constituting glass and ceramics, respectively, among said compounds having been 25 to 75 mol percent, based on monomeric compounds, of at least one silicon compound of general formula (I)
R'SiR₃ (I)
wherein R' is a group stable to hydrolysis and having one or more carbon-to-carbon double or triple bonds or an epoxy group and the radicals R, which may be the same or different, represent OH groups and/or groups susceptible to hydrolysis, selected from hydrogen, halogen, alkoxy, acyloxy, alkylcarbonyl and -NR'''₂ (R''' = H and/or alkyl)
or a corresponding amount of an already precondensed compound of general formula (I);
and 25 to 70 mol percent of at least one compound of general formula (II) and/or general formula (III)
SiR₄ (II)
and/or
AlR₃ (III)
wherein the radicals R, which may be the same or different, are defined as above;
(b) curing, optionally after a prior drying step, parts of the applied coating composition thermally and/or by irradiation by exposing only predetermined areas of the coating composition to thermal and/or radiation energy; and
(c) removing the uncured parts of the coating composition in suitable manner.

2. Process according to claim 1, characterized in that the radical R' in general formula (I) is a group having an activated (C-C-) double bond, particularly a radical comprising a (meth)acrylic group or a radical comprising an epoxy group.

3. Process according to any one of claims 1 and 2, characterized in that the compound of general formula (I) is employed in amounts of 30 to 75 mol percent, particularly 35 to 75 mol percent.

4. Process according to any one of claims 1 to 3, characterized in that the coating composition is derived also from at least one compound of general formula (IV):
R''SiR₃ (IV)
wherein R'' represents an alkyl or aryl group and the radicals R, which may be the same or different, are defined as in claims 1 and 2;
which compound has been employed in amounts of up to 40 mol percent, particularly 5 to 30 mol percent (based on monomeric compounds).

5. Process according to any one of claims 1 to 4, characterized in that glass or metal, particularly aluminum or copper, is utilized as substrate onto which the coating composition is applied.

6. Process according to any one of claims 1 to 5, characterized in that the coating composition is applied by means of a dipping or spinning operation.

7. Process according to any one of claims 1 to 6, characterized in that the curing in step (b) is effected by radiation rich in energy, particularly UV radiation, in the presence of a photoinitiator.

8. Process according to any one of claims 1 to 7, characterized in that for curing the coating composition is irradiated through a system of diaphragms or a matrix or is heated dot-wise.

9. Process according to any one of claims 1 to 8, characterized in that the removal of the uncured parts of the coating composition in step (c) is conducted by dissolving said parts in a suitable solvent or mixture of solvents, respectively.

10. Coating composition for use in the process according to any one of claims 1 to 9, characterized in that it has been prepared by hydrolytic polycondensation of
25 to 75 mol percent of at least one compound of general formula (I)
R'SiR₃ (I)
wherein R' is a group stable to hydrolysis and having one or more carbon-to-carbon double or triple bonds or an epoxy group and the radicals R, which may be the same or different, represent OH groups and/or groups susceptible to hydrolysis, selected from hydrogen, halogen, alkoxy, acyloxy, alkylcarbonyl and -NR'''₂ (R''' = H and/or alkyl);
25 to 70 mol percent of at least one compound of general formula (II) and/or of general formula (III)
SiR₄ (II)
and/or
AlR₃ (III)
wherein the radicals R, which may be the same or different, are defined as above;
0 to 40 mol percent, particularly 5 to 30 mol percent, of at least one compound of general formula (IV)
R''SiR₃ (IV)
wherein R'' represents an alkyl or aryl group and the radicals R are defined as above;
the above compounds being optionally present in partially or completely precondensed form.

## Revendications

1. Procédé de fabrication de matériaux comportant un revêtement de surface possédant une structure et transformable en verre ou en céramique, caractérisé en ce que :
a) on applique sur un substrat un vernis ou une laque qui a été obtenu(e) par polycondensation hydrolytique de composés comportant des éléments formateurs d'un verre ou d'une matière céramique, 25 à 75 moles % de ces composés, par rapport aux composés monomères, étant constitués d'un composé de silicium de formule générale (I) :
R' SiR₃ (I)
dans laquelle R' représente un groupe stable à l'hydrolyse, comportant une ou plusieurs double(s) ou triple(s) liaison(s) carbone-carbone, ou un groupe époxy;
et les restes R, qui peuvent être identiques ou différents, représentent chacun des groupes OH et/ou des groupes sensibles à l'hydrolyse, qui sont choisis parmi un atome d'hydrogène, un atome d'halogène, un groupe alcoxy, acyloxy, alkylcarbonyle et -NR'''₂ (R''' = H et/ou un groupe alkyle)),
ou des quantités correspondantes d'un composé de formule générale (I) déjà précondensé ;
et 25 à 70 moles % d'au moins un composé de formule générale (II) et/ou de formule générale (III) :
SiR₄ (II)
et/ou
AlR₃ (III)
formules dans lesquelles les restes R, qui peuvent être identiques ou différents sont tels que définis ci-dessus;
(b) On soumet des parties du vernis ainsi appliqué, éventuellement après un séchage préliminaire, à un durcissement par voie thermique et/ou par irradiation, en n'exposant que des zones prédéterminées du vernis à l'effet d'une énergie thermique et/ou d'un rayonnement, et
(c) On élimine de façon convenable les parties du vernis qui n'ont pas été durcies.

2. Procédé selon la revendication 1, caractérisé en ce qu'il s'agit, pour le reste R' présent dans la formule générale (I),d'un groupe comportant une double liaison (C-C-) activée, notamment d'un reste comprenant un groupe (meth)acrylique, ou d'un reste comprenant un groupe époxy.

3. Procédé selon l'une des revendications 1 et 2, caractérisé en ce que l'on utilise le composé de formule générale (I) en quantité de 30 à 75 moles %, notamment 35 à 75 moles %.

4. Procédé selon l'une des revendications 1 à 3, caractérisé en ce que le vernis dérive également d'au moins un composé de formule générale (IV) :
R''SiR₃ (IV)
(dans laquelle R'' représente un groupe alkyle ou aryle, et les restes R, qui peuvent être identiques ou différents, sont tels que définis aux revendications 1 et 2;
qui ont été utilisés en quantité allant jusqu'à 40 moles %, avantageusement 5 à 30 moles % (sur la base des composés monomères).

5. Procédé selon l'une des revendications 1 à 4, caractérisé en ce qu'on utilise comme substrat, sur lequel le vernis est appliqué, du verre ou du métal, notamment de l'aluminium ou du cuivre.

6. Procédé selon l'une des revendications 1 à 5, caractérisé en ce que l'application du vernis sur le substrat a lieu par trempé ou par projection par centrifugation.

7. Procédé selon l'une des revendications 1 à 6, caractérisé en ce que le durcissement a lieu à l'étape (b) par un rayonnement riche en énergie, notamment un rayonnement UV, en présence d'un photo-amorceur.

8. Procédé selon l'une des revendications 1 à 7, caractérisé en ce que, pour son durcissement, le vernis est irradié à l'aide d'un système à diaphragme ou d'une matrice ou bien il est chauffé par points.

9. Procédé selon l'une des revendications 1 à 8, caractérisé en ce que, dans l'étape (c), l'élimination des parties de vernis non durcies a lieu par enlèvement par dissolution de ces parties dans un solvant ou un mélange de solvants convenable.

10. Vernis destiné à servir dans le procédé selon l'une des revendications 1 à 9, caractérisé en ce qu'il a été produit par polycondensation hydrolytique de :
25 à 75 moles % d'au moins un composé de formule générale (I) :
R'SiR₃ (I)
(dans laquelle R' représente un groupe stable à l'hydrolyse et comportant une ou plusieurs double(s) ou triple(s) liaisons carbone-carbone ou un groupe époxy, et les restes R, qui peuvent être identiques ou différents, représentent des groupes OH et/ou des groupes sensibles à une hydrolyse, qui sont choisis parmi un atome d'hydrogène, un atome d'halogène, un groupe alcoxy, alcyloxy, alkylcarbonyle et -NR'''₂ (R''' = H et/ou alkyle);
25 à 70 moles % d'au moins un composé de formule générale (II) et/ou de formule générale (III) :
SiR₄ (II)
et/ou
AlR₃ (III)
dans lesquelles les restes R, qui peuvent être identiques ou différents, sont tels que définis ci-dessus ;
0 à 40 moles %, notamment 5 à 30 moles %, d'au moins un composé de formule générale (IV) :
R''SiR₃ (IV)
dans laquelle R'' représente un groupe alkyle ou aryle et les restes R sont tels que définis ci-dessus ,
les composés ci-dessus pouvant être présents, entièrement ou partiellement, sous forme déjà précondensée.
